Europäisches Patentamt

European Patent Office

Office européen des brevets

(11) Publication number: **0 124 993**

**A1**

(12) **EUROPEAN PATENT APPLICATION**

(21) Application number: **84302115.5**

(22) Date of filing: **28.03.84**

(51) Int. Cl.³: **A 01 N 25/12**

(30) Priority: **30.03.83 US 480543**

(43) Date of publication of application:
**14.11.84 Bulletin 84/46**

(84) Designated Contracting States:
**BE CH DE FR GB IT LI LU NL SE**

(71) Applicant: **ELI LILLY AND COMPANY**
**307, East McCarty Street**
**Indianapolis Indiana 46285(US)**

(72) Inventor: **Mckerrall, James Douglas**
**747 Colborne Street**
**Brantford Ontario Canada N3S3R9(CA)**

(74) Representative: **Tapping, Kenneth George et al,**
**Lilly Industries Limited Patent Department Erl Wood**
**Manor**
**Windlesham Surrey, GU20 6PH(GB)**

(54) Granular herbicidal formulations.

(57) A granular herbicidal formulation comprising an active agent having a melting point less than 70°C but more than 25°C adsorbed onto a granular agriculturally-acceptable reconstituted carrier, consisting essentially of a finely divided adsorptive component and an expanding binder material.

EP 0 124 993 A1

## GRANULAR HERBICIDAL FORMULATIONS

This invention relates to granular herbicidal formulations suitable for use in controlling undesired vegetation.

U.S. Patent Specification No. 4,015,973 discloses certain of the reconstituted carriers used in the formulations of the invention. However, that patent specification does not mention the possibility of loading the carriers with herbicides.

According to the present invention there is provided a granular herbicidal formulation wherein the active ingredient has a melting point from 25 to 70°C and includes at least one herbicide selected from the group comprising herbicidal 2,6-dinitroanilines and herbicidal carbamates, characterized in that the active ingredient is adsorbed onto a granular agriculturally-acceptable reconstituted carrier.

An anti-caking agent may also be used in the formulation to improve flowability and prevent agglomeration of the formulated material. The present formulations have been shown to be both more herbicidally efficacious and more physically stable at elevated temperatures than other herbicidal formulations containing adsorptive granular carriers.

Suitable active agents capable of being formulated on a reconstituted carrier as defined herein are solids at atmospheric pressure and ambient temperature and characteristically have a melting point less than approximately 70°C but more than about 25°C. The active agents should be capable of being melted and should remain relatively stable while in molten form. Formulations of the present invention will contain an active agent from at least one of the following two classes of herbicides. The first class of active agents suitable for use in the present formulation are herbicidal 2,6-dinitroanilines.

The term "herbicidal 2,6-dinitroaniline" designates any herbicide comprising the 2,6-dinitroaniline structure; typically, such herbicides include substitution on the aniline nitrogen and additional substituents on the phenyl ring. Exemplary herbicidal 2,6-dinitroanilines, and their respective melting points, include the following:

benefin, 65°-66.5°C

butralin, 60°-61°C

chlornidine, 58°-60°C

ethalfluralin, 57°-59°C

fluchloralin, 42°-43°C

pendimethalin, 54°-58°C

profluralin, 32.1°-32.5°C

trifluralin, 48.5°-49°C

and the like

The second class of active agents which may be used in the present formulations are termed "herbicidal carbamates." These compounds typically comprise the carbamate or thiocarbamate structure and will contain various substituents thereon. Typical examples of herbicidal carbamates, and their respective melting points, include, but are not limited to, the following:

diallate, 25°-30°C

chlorpropham, 38°-40°C

triallate, 29°-30°C

    and the like

The formulations of the present invention may also contain a combination of two herbicides as the active component therein as long as the melting point of the combination is less than approximately 70°C but more than about 25°C. This combination will contain at least one herbicide from either of the two above defined classes. The second herbicide may also come from one of the two classes of herbicides defined herein, or from a third class of active agents known as herbicidal triazines. "Herbicidal triazines" typically comprise the triazine structure and will contain various substituents thereon. Exemplary compounds of this class include, but are not limited to, ametryn, atrazine, cyanazine, dipropetryn, metribuzin, prometon, prometryn, secbumeton, terbutryn and the like. Preferred combinations include trifluralin together with atrazine or metribuzin.

When the active agent is a combination containing a herbicidal triazine having a melting point greater than 70°C as one of the components therein, it will be obvious to those of ordinary skill in the art that a physical mixture of the two solid components may have to be heated at temperatures of greater than 70°C in order to liquify the admixture. However, once the two components of the combination are uniformly combined, and the active agent solidified, the combination should melt at temperatures less than approximately 70°C.

Therefore the term "active agent", as defined herein, refers to a homogeneous mixture of the component or components therein.

The term "herbicidally effective amount", as defined herein, refers to an amount of an active agent as defined above which either kills or stunts the growth of the weed species for which control is desired.

The exact percentage of active agent present in the novel formulation provided herein will vary somewhat with the identity of the carrier and identity and quantity of the anti-caking agent. Generally, the composition will contain from about 0.1 to about 20 percent of the active agent by weight. Preferably, the composition should contain from about 1 to about 10 percent of the active agent by weight. When the 2,6-dinitroaniline trifluralin is used, the especially preferred concentration of the active agent in the composition should be from about 2 to about 8 percent by weight. Typically, as the amount of anti-caking agent added to the admixture is increased, the higher the concentration of the active ingredient which can be supported on the surface of the granule.

The carriers employed in the formulations of the present invention are granular agriculturally-acceptable reconstituted carriers. The term "granular agriculturally-acceptable reconstituted carrier" as defined herein, refers to a carrier consisting essentially of a finely divided adsorptive component and an expanding binder material. These granules have the capacity to dissociate rapidly when wet, and therefore once formulated and applied to the soil, are believed to disperse the active agent throughout a greater area than experienced with a formulated adsorptive carrier alone.

The adsorptive components of the reconstituted carrier employed in the present formulation comprise calcium and/or magnesium containing materials. For example, these materials typically contain $CaCO_3$ (limestone) or $CaMg(CO_3)_2$ (dolomitic limestone). An additional calcium source includes $CaSO_4$ (gypsum). Other materials include burned lime, marl, crushed oyster shells, marble or slag. The concentration of adsorptive materials present in the reconstituted carrier will be from about 90% to about 99% by dry weight.

The expanding binder material will be present in the reconstituted carrier at a concentration of from about 1% to about 10% by dry weight. Suitable binders are high expansion or high swelling clays, that is, a clay which, when wetted, will swell and also act as a binder. Examples of typical high expansion binders include the various attapulgites, diatomites, fullers earths, montmorillonites, vermiculites, bentonites, kaolinites, lignins and the like. Preferred high expansion binders are sodium bentonite, calcium bentonite, the montmorillonites and the lignins such as ammonium, sodium and calcium lignosulfonates.

The reconstituted carriers employed in the present invention are prepared by combining the ingredients, as described above, and intimately mixing them in a pulverizer. The admixture is reduced to a size such that all, or a substantial portion thereof, will pass a 100 mesh screen (all screen sizes stated hereinafter are in accordance with the United States Bureau of Standards). This material is then transferred to a granulator wherein granules are formed using water as the granulating agent. The process used to prepare typical reconstituted carriers as used herein is described in detail in U.S. Patent No. 4,015,973, herein incorporated by reference.

The following are examples of reconstituted carriers capable of use in the formulations of the present invention. These carriers are supplied by the American Pelletizing Corporation, Des Moines, Iowa. All percentages for the ingredients listed are based on weight. Also presented are the percentages of particles prior to granulation passing through the specified sieve sizes.

| Carrier 1 | Percent by Weight |
|---|---|
| Hydrated Calcium Sulfate | 74.0 |
| Calcium | 22.0 |
| Sulfur | 17.3 |
| Binder | 2.0 |
| Water | 1.0 |
| Passing 8 mesh | 100% |
| Passing 10 mesh | 95% |
| Passing 20 mesh | 93% |

X-5878                                    -7-

| | | |
|---|---|---|
| Passing 60 mesh | | 60% |
| Passing 100 mesh | | 50% |
| Passing 200 mesh | | 40% |

Carrier 2

| | | |
|---|---|---|
| Calcium Carbonate Equivalent | | 98.0 |
| | Calcium Carbonate | 53.0 |
| | Calcium Oxide | 29.7 |
| | Calcium | 21.2 |
| | Magnesium Carbonate | 40.0 |
| | Magnesium Oxide | 19.1 |
| | Magnesium | 11.5 |
| Clay | | 2.0 |
| Water | | 1.5 |
| Passing 8 mesh | | 100% |
| Passing 10 mesh | | 95% |
| Passing 20 mesh | | 93% |
| Passing 40 mesh | | 75% |
| Passing 50 mesh | | 65% |
| Passing 60 mesh | | 60% |
| Passing 100 mesh | | 50% |

## Carrier 3

| | | |
|---|---|---|
| Calcium Carbonate Equivalent | | 95.2 |
| | Calcium Carbonate | 74.8 |
| | Calcium | 30.0 |
| | Magnesium Carbonate | 17.3 |
| | Magnesium | 5.0 |
| Binder | | 2.0 |
| Water | | 1.0 |
| Passing 8 mesh | | 100% |
| Passing 10 mesh | | 95% |
| Passing 20 mesh | | 93% |
| Passing 40 mesh | | 75% |
| Passing 50 mesh | | 65% |
| Passing 60 mesh | | 60% |
| Passing 100 mesh | | 50% |
| Passing 200 mesh | | 40% |

The reconstituted carrier is preferably sieved through wire meshed screens in order to ensure proper particle size before being used to prepare the present formulation. It has been found that sized granular carriers are more uniformly coated with the molten active agent and also contribute to the assurance of acceptably sized particles of the formulated product. Suitably sized particles of unformulated carrier may be in the range of from about 10 mesh to about 100 mesh U.S. sieve. Preferred sieve size is 20/60 mesh.

The process used to prepare the formulations of the present invention involves adsorbing the molten herbicide onto the reconstituted carrier and is described in detail below.

The active agents employed in the present invention are liquified by apparatuses well known in the art. For example, the active agents may be melted by steam in a melt tank. Melt tanks are typically stainless steel and come in assorted sizes. Nearly any vessel that is capable of being pressurized may be used in this process. For smaller quantities of formulated material, hand-held spray atomizers containing the solid herbicide may be heated, thereby liquifying the herbicide. After the active has reached a liquid state, the tank is pressurized, typically by forcing air into it. Suitable pressures for spraying may range from 5 to 50 pounds per square inch, with preferred pressures ranging from 10 to 30 pounds per square inch, depending on the type and temperature of the molten active.

The molten active agent is preferably sprayed onto the carrier in a state of agitation, which is readily practiced by known methods and apparatuses. Suitable types of mixers include a Munson mixer (Munson Mill Machinery Co., Utica, New York), coating pan mixer, cement mixer, mini-tumbler, ribbon blender, or the like. Preferably, for larger quantities of formulated material the mixing is done in a Munson mixer, while the mini-tumbler works well for smaller quantities (i.e. 500 grams). Within a Munson mixer is generally contained a spray bar onto which from 1 to 20 spray nozzles may be attached depending on the size of the mixer. The height of the spray bar above the stationary bed of carrier, the number and type of spray nozzles, and pressure of the molten spray are all important factors in assuring the uniformity of active agent on the reconstituted carrier.

The type of spraying device, including its distance from the bed of carrier, should be adjusted in an effort to minimize the amount of oversize produced by this process. The term "oversize", as used herein, refers to the amount of commercially less acceptable formulated product which is obtained after the final product is sieved following processing. Generally, this material will not pass through a U.S. sieve size 8 mesh, and characteristically possesses the active agent on its surface at concentrations of 15% to 20% or greater.

When using a Munson mixer it has been found that oversize is minimized when the distance from the spray nozzle to the bed of carrier is from about 4 to about 40 inches in height. The spray nozzles used are well known in the art and include those series designated as 6500 and 8000, for example, as manufactured by Spraying Systems Co., Wheaton, Illinois. These designations represent a 65° or 80° angle, respectively, created by the molten active agent as it exits the spray orifice. The nozzles of choice have been found to be those designated as 8000, particularly 8003 and 8004. The number of nozzles varies depending on the quantity of carrier to be formulated and size of mixer used to perform this process.

Anti-caking agents are preferably used in the present formulations to prevent agglomeration of the formulated product, thereby improving its flowability. Agriculturally-acceptable anti-caking agents found useful in the formulations of the present invention include the various attapulgites, diatomites, fullers earths, montmorillonites, vermiculites, bentonites, kaolinites, pyrophyllites, talcs, synthetics and the like. Of these, the diatomites are the anti-caking agents of choice, with the Celatoms (Eagle-Picher, Cincinnati, Ohio) being preferred. Another preferred anti-caking agent is the synthetic Micro-Cel (Johns-Manville Products Corp., New York, New York). However it is not always necessary to add an anti-caking agent to the formulation. When used, the anti-caking agent may be present in from about 0.1 to about 10 percent by weight of the admixture, preferably from about 1 to about 5 percent by weight. The anti-caking agent may be added to the mixer before or after spraying the molten active agent onto the carrier. Generally, the anti-caking agent is added to the mixer containing the formulated admixture and agitated until uniformly dispersed throughout. The preferred mixing time usually ranges from about 1 to about 5 minutes in length.

The formulations of the present invention may also contain a small amount of a dye in addition to the ingredients described above. The dyes are present merely for visual reasons, for example to distinguish the formulation from other types of similar formulations. The amount of dye present in the formulation depends on the color desired but will typically be present in the range of about 0.01 to about 1 percent by weight.

An additional step may be employed to prepare the formulations disclosed herein. This step involves sieving the formulated material to ensure proper particle size. Typically, the oversize is removed with 8 to 14 mesh wire screens; however, slightly larger or smaller mesh screens may be used depending on the herbicide. It is also desirable to remove the smaller particles as well, and this is typically done using a wire meshed screen containing approximately 60 squares per inch. Again, slightly larger or smaller screens may be used. This preferred range of particle sizes has been discovered to give the most uniform distribution when applied to the area for which weed control is desired.

The following detailed Examples are provided in an effort to more fully illustrate specific aspects of this invention. The Examples are not intended to be limiting in any respect and should not be so construed.

## Example 1

A hand-held DeVilbiss spray atomizer containing 26.8 g. of 95% pure technical trifluralin was heated in an oven so as to melt the trifluralin. Keeping the active agent in a molten form with a hand-held heat gun, the trifluralin was sprayed onto 463.2 g. of 16/100 mesh reconstituted calcium carbonate (Carrier 3 above from American Pelletizing Corp.). The carrier was under agitation with the aid of a Rampe Laboratory mini-tumbler. The molten trifluralin was sprayed for approximately 15 minutes at a spray pressure of about 20 to 25 pounds per square inch. The material was allowed to mix for about two additional minutes after spraying, and about 10.0 g. of Celatom MN-41 (Eagle-Picher, Cincinnati, Ohio) was added. The product was post-blended for an additional 5 minutes and passed over a 20 mesh screen to remove the oversize material. The acceptably sized particles, as determined by assay, contained 4.87% trifluralin by weight.

## Example 2

Following the general procedure described in Example 1, 26.8 g. of 95% pure technical trifluralin, 463.2 g. of 16/100 mesh reconstituted calcium sulfate (Carrier 1) and 10.0 g. of Celatom MN-41 were formulated to provide acceptably sized particles, as determined by assay, containing 5.49% trifluralin by weight.

## Example 3

Again following the general procedure outlined in Example 1, 26.8 g. of 95% pure technical trifluralin, 463.2 g. of 20/60 mesh reconstituted calcium carbonate (Carrier 3) and 10.0 g. of Celatom MN-41 as anti-caking agent were formulated to provide acceptably sized particles, as determined by assay, containing 5.19% trifluralin by weight.

## Example 4

Following the general process of Example 1, 26.8 g. of 95% pure technical trifluralin, 463.2 g. of 20/60 mesh reconstituted calcium sulfate (Carrier 1) and 10.0 g. of Celatom MN-41 were formulated to provide acceptable size particles containing 5.07% trifluralin by weight as determined by assay.

## Example 5

With the exception of the addition of the anti-caking agent, 13.5 g. of 95% pure technical benefin and 486.5 g. of 20/60 mesh reconstituted calcium sulfate (Carrier 1) were formulated as in Example 1 to give acceptably sized particles containing benefin, as determined by assay, at a concentration of 2.78% by weight.

## Example 6

The spray atomizer was charged with 42.88 g. of 95% pure technical triallate and 0.2 g. of Calco Oil Red YM (dye) and heated in an oven so as to liquify the ingredients. The remainder of the process was similar to that of Example 1 as 346.92 g. of 30/60 mesh reconstituted calcium carbonate (Carrier 3), 2.0 g. of Micro-Cel E and 8.0 g. of Celatom MN-41 were admixed to provide suitably formulated granules containing 8.9% triallate by weight as determined by assay.

## Example 7

According to the procedure of Example 6, 26.3 g. of 95% pure technical triallate, 13.15 g. of 95% pure technical trifluralin, 0.25 g. of Calco Oil Red YM, 2.5 g. of Micro-Cel E, 10.0 g. of Celatom MN-41, and 447.8 g. of 20/60 mesh reconstituted calcium carbonate (Carrier 3) were formulated and assayed to provide acceptably sized granules containing 2.03% trifluralin and 4.75% triallate by weight.

## Example 8

According to the procedure of Example 6, 26.3 g. of 97% pure technical trifluralin, 5.65 g. of 93% pure technical metribrizin, 0.25 g. of Calco Oil Blue GM, 2.5 g. of Micro-Cel E, 7.5 g. of Celatam MN-41 and 457.8 g. of 20/60 mesh reconstituted calcium carbonate (Carrier 3) were formulated and assayed to provide acceptably sized granules containing 4.5% trifluralin and 0.97% metribrizin by weight.

The activity of representative formulations of the present invention is illustrated by the following experiments.

## Experiment 1

The purpose of this experiment was to determine the herbicidal activity and tolerance of crops following treatment with representative trifluralin formulations of the invention.  In turn, these results were compared with both existing formulation and control data.

The procedure used in this experiment was as follows.  Five thousand grams of sterilized greenhouse soil was placed in a rotary cement mixer and the appropriate amount of the formulated granules were sprinkled evenly over the soil surface as it tumbled.  After incorporation, the soil was placed in flats and moved to the greenhouse where it was sub-irrigated one time to ensure uniform wetting of the soil.  The soil was kept moist for 5 days at which time watering was stopped and the soil was allowed to dry.  On the ninth day after incorporation the soil was remixed and crop and weed species were planted.  The flats were sub-irrigated one time and surface watered as needed for the remainder of the experiment.  On day 14 crop and weed injury ratings were recorded using untreated control plants as standards. The degree of herbicidal activity was determined by rating the treated plants on a scale from 0 to 10.  On this scale, 0 indicates no injury, 1-3 indicates slight injury, 4-6 indicates moderate injury, 7-9 indicates severe injury and 10 indicates death to the plant or no seedling emergence.

Table 1 presents the herbicidal activity of representative formulations of the invention (Examples 1-4) when evaluated in the screen described above.  The other three formulations set forth in the Table are current commercial formulations containing standard limestone and clay carriers.

## Table 1

### Pre-Plant Incorporated Trifluralin Formulations

| Example No. of Formulation Tested | Rate of Application lbs/acre (kg/ha) | Crops | | | Weeds | | |
|---|---|---|---|---|---|---|---|
| | | Cotton | Corn | Soybean | Foxtail Millet | Pigweed | Crabgrass |
| 1 | 2.0 (2.24) | 1 | 7 | 0 | 10 | 10 | 10 |
| | 1.0 (1.12) | 2 | 4 | 7 | 10 | 10 | 10 |
| | 0.5 (0.56) | 0 | 1 | 1 | 9 | 9 | 10 |
| | 0.25 (0.28) | 0 | 0 | 1 | 1 | 6 | 9 |
| 2 | 2.0 (2.24) | 2 | 7 | 2 | 10 | 10 | 10 |
| | 1.0 (1.12) | 1 | 5 | 0 | 10 | 10 | 10 |
| | 0.5 (0.56) | 0 | 1 | 0 | 10 | 9 | 10 |
| | 0.25 (0.28) | 1 | 1 | 1 | 9 | 8 | 10 |
| 3 | 2.0 (2.24) | 0 | 7 | 0 | 10 | 10 | 10 |
| | 1.0 (1.12) | 0 | 3 | 1 | 10 | 10 | 10 |
| | 0.5 (0.56) | 0 | 1 | 2 | 10 | 9 | 10 |
| | 0.25 (0.28) | 0 | 0 | 0 | 7 | 5 | 10 |
| 4 | 2.0 (2.24) | 3 | 8 | 8 | 10 | 10 | 10 |
| | 1.0 (1.12) | 2 | 6 | 1 | 10 | 10 | 10 |
| | 0.5 (0.56) | 1 | 2 | 1 | 10 | 10 | 10 |
| | 0.25 (0.28) | 0 | 1 | 1 | 8 | 8 | 10 |

## Table 1 (continued)

### Pre-Plant Incorporated Trifluralin Formulations

| Example No. of Formulation Tested | Rate of Application lbs/acre (kg/ha) | Crops | | | Weeds | | |
|---|---|---|---|---|---|---|---|
| | | Cotton | Corn | Soybean | Foxtail Millet | Pigweed | Crabgrass |
| 5% 30/60 Mesh Lime-stone Granule | 2.0 (2.24) | 2 | 6 | 2 | 10 | 10 | 10 |
| | 1.0 (1.12) | 2 | 4 | 1 | 10 | 9 | 10 |
| | 0.5 (0.56) | 2 | 3 | 2 | 8 | 9 | 10 |
| | 0.25 (0.28) | 1 | 1 | 0 | 0 | 2 | 5 |
| 5% 30/60 Mesh Lime-stone Granule | 2.0 (2.24) | 2 | 6 | 2 | 10 | 10 | 10 |
| | 1.0 (1.12) | 1 | 1 | 1 | 9 | 9 | 10 |
| | 0.5 (0.56) | 1 | 2 | 2 | 6 | 7 | 10 |
| | 0.25 (0.28) | 2 | 0 | 2 | 5 | 5 | 9 |
| 5% 30/60 Mesh Lime-stone Granule | 2.0 (2.24) | 0 | 6 | 1 | 10 | 10 | 10 |
| | 1.0 (1.12) | 0 | 4 | 2 | 10 | 10 | 10 |
| | 0.5 (0.56) | 0 | 0 | 1 | 9 | 8 | 10 |
| | 0.25 (0.28) | 0 | 0 | 2 | 7 | 7 | 10 |
| Control | 0 | 0 | 0 | 0 | 0 | 0 | 0 |

## Experiment 2

A second greenhouse experiment was undertaken to evaluate the herbicidal efficacy of representative trifluralin formulations of the present invention. The procedure used for the incorporation of the granules and subsequent watering of the soil was similar to that outlined in Experiment 1. Ten days after incorporation the appropriate crop and weed species seeds were hand planted into the soil at a depth of one centimeter. The flats were watered as necessary and at 18 and 28 days after incorporation crop and weed injury ratings were recorded using untreated control plants as standards. The rating scale was the same as that outlined in Experiment 1. Table 2 presents the data of a representative formulations of the invention in comparison to other trifluralin granular formulations. The first three formulations listed in the Table represent formulations of the invention. These formulations contained 5.36% trifluralin, 2.0% Celatom MN-41 and 92.64% of the reconstituted carrier as specified in the Table by weight. The fourth formulation represents the current commercial formulation of 5% trifluralin on limestone.

### Table 2

**Pre-Plant Incorporated Trifluralin Granular Formulations**

| Treatment | Application Rate kg/ha | Days After Application | Crops | | Weeds | | |
|---|---|---|---|---|---|---|---|
| | | | Rapeseed | Wheat | Wild Oat | Foxtail | Redroot Pigweed |
| Trifluralin | 1.4 | 18 | 0 | 3.8 | 4.5 | 10.0 | 4.5 |
| on 20/60 Mesh | | 28 | 0 | 6.0 | 7.8 | 10.0 | 9.0 |
| Reconstituted | 1.1 | 18 | 0 | 2.0 | 3.5 | 6.5 | 3.5 |
| Calcium Carbonate | | 28 | 0 | 3.0 | 4.0 | 7.8 | 7.0 |
| | 0.8 | 18 | 0 | 0.5 | 0.5 | 3.5 | 0.5 |
| | | 28 | 0 | 0.5 | 0.5 | 4.5 | 2.0 |
| Trifluralin | 1.4 | 18 | 0 | 2.0 | 5.3 | 9.8 | 4.5 |
| on 16/100 Mesh | | 28 | 0 | 2.5 | 5.0 | 9.9 | 6.8 |
| Reconstituted | 1.1 | 18 | 0 | 2.0 | 4.5 | 7.5 | 3.0 |
| Calcium Sulfate | | 28 | 0 | 1.5 | 5.5 | 9.9 | 6.5 |
| | 0.8 | 18 | 0 | 0 | 0.5 | 5.3 | 0 |
| | | 28 | 0 | 0 | 1.5 | 7.2 | 2.0 |
| Trifluralin | 1.4 | 18 | 0 | 3.5 | 5.3 | 10.0 | 3.0 |
| on 20/60 Mesh | | 28 | 1.0 | 7.0 | 8.5 | 10.0 | 9.0 |
| Reconstituted | 1.1 | 18 | 0 | 2.5 | 4.3 | 9.0 | 1.0 |
| Calcium Sulfate | | 28 | 0 | 2.0 | 3.5 | 7.4 | 4.5 |
| | 0.8 | 18 | 0 | 0 | 1.0 | 3.5 | 0 |
| | | 28 | 0 | 1.0 | 2.0 | 6.0 | 1.0 |

## Table 2

### Pre-Plant Incorporated Trifluralin Granular Formulations

| Treatment | Application Rate kg/ha | Days After Application | Crops | | Weeds | | |
| --- | --- | --- | --- | --- | --- | --- | --- |
| | | | Rapeseed | Wheat | Wild Oat | Foxtail | Redroot Pigweed |
| 5% Trifluralin | 1.4 | 18 | 0 | 2.0 | 3.0 | 8.8 | 2.0 |
| on 30/60 Mesh | | 28 | 0 | 1.5 | 3.0 | 9.7 | 4.0 |
| Limestone | 1.1 | 18 | 0 | 0 | 1.0 | 7.3 | 1.5 |
| | | 28 | 0 | 0 | 3.0 | 7.5 | 1.5 |
| | 0.8 | 18 | 0 | 0 | 0 | 1.5 | 1.5 |
| | | 28 | 0 | 0 | 0 | 1.0 | 0 |

## Physical Stability Study

The following study was conducted in an effort to demonstrate the improved physical stability of formulations of the invention containing trifluralin when compared to current commercial formulations of trifluralin on limestone. Three representative formulations of the invention were tested in this study. Each of these formulations contained 5.36% trifluralin, 2.0% Celatom MN-41 and 92.64% of a reconstituted carrier. The reconstituted carriers employed were 20/60 mesh calcium carbonate, and 16/100 mesh and 20/60 mesh calcium sulfate. For comparison, the current commercial formulation of 5% trifluralin on 30/60 mesh limestone was also tested.

Vials of twenty-five grams of each formulation were stored in a Blue Max incubator at 52°C for 3 months. Each formulation was observed at regular intervals to see if differences existed in degree of product melting and severity of caking. Changes in formulation coloration were noted.

Differences in physical characteristics of the formulations of the present invention as compared to the trifluralin on limestone formulations were noticeable after storage at 52°C. There was a noticeable color change in the trifluralin on limestone formulation. The color went from a yellowish grey to a burnt brown color. This indicates that severe melting of the trifluralin technical occurred at 52°C and upon cooling the initial

0124993

integrity of the product was not restored.  Also, severe lumping of the product was noticed.

No discoloration was noticed in any of the formulations of the present invention.  The color of these formulations was a greenish-yellow.  After exposure to temperatures of 52°C there was no change in color.  The degree of trifluralin melting that was evident in the trifluralin on limestone formulation was not evident with the present formulations.  Although some lumping was evident after 52°C storage, this lumping was minor compared to that noticed for the trifluralin on limestone formulation.  With a slight tap on the vial, these lumps disappeared and a free flowing, consistent product remained.

The same study was conducted with formulations containing trifluralin and triallate as the active agent.  The formulation of Example 7 above was compared to a formulation containing the same ingredients with the exception that 30/60 mesh limestone was substituted for the 20/60 mesh reconstituted calcium carbonate carrier of Example 7.  Using the same procedure as outlined above, similar improved physical stability results were noted for the formulation of the invention when compared to the formulation containing the standard limestone carrier.

## CLAIMS

1.    A granular herbicidal formulation wherein the active ingredient has a melting point from 25 to 70°C and includes at least one herbicide selected from the group comprising herbicidal 2,6-dinitroanilines and herbicidal carbamates, characterized in that the active ingredient is adsorbed onto a granular agriculturally-acceptable reconstituted carrier.

2.    The formulation of Claim 1 wherein the active agent is a 2,6-dinitroaniline.

3.    The formulation of Claim 2 wherein the 2,6-dinitroaniline is trifluralin.

4.    The formulation of Claim 2 wherein the 2,6-dinitroaniline is ethalfluralin.

5.    The formulation of Claim 1 wherein the active agent is a herbicidal carbamate.

6.    The formulation of Claim 6 wherein the herbicidal carbamate is triallate.

7.    The formulation of Claim 1 wherein the active agent is a combination of a herbicidal 2,6-dinitroaniline and a herbicidal carbamate.

8.    The formulation of Claim 8 wherein the herbicidal 2,6-dinitroaniline is trifluralin and the herbicidal carbamate is triallate.

9.    The formulation of Claim 2 wherein the active agent additionally includes a herbicidal triazine.

10.    The formulation of Claim 9 wherein the 2,6-dinitroaniline is trifluralin.

11.     The formulation of Claim 10 wherein the triazine is metribrizin.

12.     The formulation of Claim 10 wherein the triazine is atrazine.

13.     The formulation of any one of Claims 1 to 12, wherein an anti-caking agent is also present.

## DOCUMENTS CONSIDERED TO BE RELEVANT

| Category | Citation of document with indication. where appropriate, of relevant passages | Relevant to claim | CLASSIFICATION OF THE APPLICATION (Int. Cl. 3) |
|---|---|---|---|
| Y | US-A-3 274 052 (J. YAFFE et al.)<br>* Column 2, lines 42-64; column 3, lines 16-25, 56-58 * | 1 | A 01 N 25/12 |
| Y,D | US-A-4 015 973 (P.M. PERRINE)<br>* Column 3, line 43 - column 4, line 37 * | 1 | |
| A | US-A-3 257 190 (Q.F. SOPER)<br>* Column 16, lines 40-64 * | 1-4 | |

TECHNICAL FIELDS SEARCHED (Int. Cl. 3)

A 01 N

The present search report has been drawn up for all claims

| Place of search | Date of completion of the search | Examiner |
|---|---|---|
| THE HAGUE | 27-07-1984 | DECORTE D. |